# EUROPÄISCHE PATENTSCHRIFT

(11) **EP 1 446 611 B1**
(45) Veröffentlichungstag und Bekanntmachung des Hinweises auf die Patenterteilung: **25.08.2010**
(21) Anmeldenummer: 02787807.3
(22) Anmeldetag: 25.11.2002
(51) Int. Cl.: F23M 9/06, F23D 14/62, F02D 1/02, F02K 7/06

(54) **Verwendung eines Strömungskörpers und Verbrennungseinrichtung mit einem solchen Strömungskörper**
Use of an aerodynamic body and combustion device provided with an aerodynamic body of this type
Utilisation d'un corps aérodynamique et dispositif de combustion doté d'un tel corps aérodynamique

(30) Priorität: 23.11.2001 DE 10158295
(43) Veröffentlichungstag der Anmeldung: 18.08.2004
(73) Patentinhaber: Bramble-Trading Internacional LDA, Funchal, Madeira (PT)
(72) Erfinder: STAFFLER, Franz, Josef, I-39100 Bozen (IT); BRANZI, Vincenzo, I-38027 Terzolas (IT)
(74) Vertreter: Grunert, Marcus
(86) Internationale Anmeldenummer: PCT/EP2002/013243
(87) Internationale Veröffentlichungsnummer: WO 2003/044431

(56) Entgegenhaltungen:
- WO-A-98/42968
- WO-A-99/24756
- DE-A- 2 153 817
- DE-A- 4 137 573
- DE-A- 19 806 315
- DE-C- 19 860 237
- FR-A- 1 595 670
- US-A- 1 980 266
- US-A- 2 583 570
- US-A- 2 714 847
- US-A- 3 517 821
- US-A- 3 636 983
- US-B1- 6 220 852

## Beschreibung

Die Erfindung betrifft eine Verwendung eines Strömungskörpers zur Beeinflussung der Dynamik einer Strömung -. Die Erfindung betrifft weiterhin eine Vorrichtung zur Verbrennung eines Brennstoffgemischs mit einem solchen Strömungskörper gemäß Oberbegriff des Anspruchs 12.

Strömungs- oder Ablenkkörper werden in verschiedenen Bereichen der Technik eingesetzt, um Strömungen abzulenken oder in ihrer Dynamik zu beeinflussen. In der Verbrennungstechnik ist es beispielsweise bekannt, zur besseren Verteilung eines zu verbrennenden Brennstoffgemischs innerhalb einer Reaktionskammer eine Ablenkfläche in Strömungsrichtung des Gemischs anzuordnen. Eine derartige Ablenkfläche wird in der WO 99/24756 dazu verwendet, das zu verbrennende Gemisch aus der ursprünglichen Einströmrichtung abzulenken und möglichst symmetrisch im Inneren der Reaktionskammer zu verteilen, wodurch eine Vermischung der einzelnen Komponenten des Brennstoffgemischs und damit eine schnelle und vollständige Verbrennung des selbigen unterstützt wird. Als Ablenkfläche werden in dieser Schrift Kegel- oder Pyramidenoberflächen vorgeschlagen, deren Spitze in Richtung des einströmenden Gemisches zeigt.

Als nachteilig erweist sich bei einer derartigen Ablenkfläche, dass durch die mit der Ablenkung verbundene Abbremsung der Komponenten des Brennstoffgemischs sowie durch teilweise Reflexionen dieser Komponenten zurück in Richtung der Einströmöffnungen eine homogene, sich in Richtung der Auslassöffnung der Reaktionskammer beschleunigende Strömung des verbrennenden Gemischs nicht in der gewünschten Weise erzielt werden kann.

Weiterhin ist aus der DE 21 53 817 OS ein Brenner zur Verbrennung von Abfallstoffen bekannt, bei dem die Abfallstoffe zusammen mit Luft, die stufenweise zugeführt wird, in einen Verbrennungsraum gelangen, in dem ein sogenannter Glühkopf angeordnet ist. Dieser Glühkopf besitzt eine kegelförmige Gestalt und ist mit seiner Spitze in Richtung des einströmenden zu verbrennenden Gemischs und koaxial zur Raumachse des Verbrennungsraums angeordnet. Dieser Glühkopf besitzt eine Temperatur von 1200 bis 1400°C und bewirkt eine Verbrennung noch unverbrannter Teile des Abfallstoffs, wie beispielsweise schwer brennbare feste Teilchen. Dieser Glühkopf kann auch als Ring ausgebildet sein.

Auf die Strömungsdynamik im Verbrennungsraum hat ein derartiger Glühkopf gemäß DE 21 53 817 OS aus den bereits erwähnten Gründen einen negativen Einfluss.

Die FR-A-1 595 670 offenbart eine in einem Heizkessel eingesetzte Vorrichtung zur Verbrennung eines Brennstoffgemischs mit einer Misch- und Reaktionskammer und mit einem mit seiner Hauptachse innerhalb der Kammer in Strömungsrichtung angeordneten Strömungskörper zum Wärmetausch und/oder zum Erzeugen von Turbulenzen.

Von dieser Problematik ausgehend stellt sich vorliegende Erfindung die Aufgabe, einen Strömungskörper anzugeben, der allgemein die Dynamik einer Strömung für verschiedene Verwendungen positiv beeinflusst und insbesondere ermöglicht, die Strömung zu vergleichmäßigen und die Strömungsgeschwindigkeit zu steuern. Der Strömungskörper soll sich insbesondere zum Einsatz bei der Verbrennung eines Brennstoffgemischs eignen.

Diese Aufgabe wird erfindungsgemäß durch eine Verwendung eines Strömungskörpers in einem Verbrennungsverfahren gemäß Anspruch 1 gelöst. Eine erfindungsgemäße Verbrennungsvorrichtung beschreibt Anspruch 12. Vorteilhafte Ausgestaltungen ergeben sich aus den jeweiligen Unteransprüchen und der nachfolgenden Beschreibung.

Zu Zwecken der vorliegenden Beschreibung meint Airfoil ein Profil, das der Oberseite eines Tragflügelquerschnitts im wesentlichen entspricht. Ein rotationssymmetrisches Airfoil kann somit durch Rotation eines Tragflügelprofils um seine Profilsehne erzeugt werden. Der erfindungsgemäß verwendete Strömungskörper kann dann einem solchen rotationssymmetrischen Airfoil entsprechen. Dabei kann es vorteilhaft sein, den Strömungskörper in seiner Geometrie veränderbar zu gestalten. Hierzu kann der Strömungskörper aus mehreren Teilen zusammengesetzt sein, die austauschbar sind, um Geometrieparameter wie Durchmesser oder Länge sich ändernden Situationen anpassen zu können. Es ist auch denkbar, einen dynamisch in seiner Geometrie veränderbaren Strömungskörper zu gestalten.

Bei einem vollständig rotationssymmetrischen Strömungskörper sind bei einem parallel zur Rotationsachse anströmenden Fluid die Strömungszeiten entlang der Oberfläche des Strömungskörpers gleich. Bei einem Airfoil existieren zwei Staupunkte, wobei der vordere Staupunkt am stumpfen Ende und der hintere Staupunkt an der spitzen Profilhinterkante liegt. Es ist vorteilhaft, den Strömungskörper in der Strömung derart anzuordnen, dass der hintere Staupunkt stromabwärts liegt.

Bei einer solchen Anordnung erhöht sich bei der Strömung vom vorderen zum hinteren Staupunkt die Strömungsgeschwindigkeit im Vergleich zur Strömungsgeschwindigkeit ohne Strömungskörper. Auftretende Auftriebskräfte, wie sie bei Tragflügelprofilen bekannt sind, heben sich aufgrund der Symmetrie der Anordnung gegenseitig auf.

Weiterhin lässt sich bei der erfindungsgemäßen Verwendung der genannte rotationssymmetrische Strömungskörper zur Erzeugung einer laminaren Strömung verwenden. Aufgrund der Rotationssymmetrie erreichen die vom vorderen Staupunkt ausgehenden Fluidteilchen den hinteren Staupunkt an der spitzen Profilhinterkante zum gleichen Zeitpunkt, so dass eine laminare Strömung vorliegt. Gleichzeitig ist die Strömungsgeschwindigkeit gegenüber derjenigen ohne Strömungskörper erhöht, da sich auf der Oberseite (Saugseite) eines Airfoils eine Druckverminderung einstellt.

Die Erhöhung der Strömungsgeschwindigkeit durch das Einbringen des Strömungskörpers kann zur Erzeugung eines Saugeffektes ausgenutzt werden, um ein Fluid und/oder von einem Fluid mitgeführte Partikel in Strömungsrichtung zu beschleunigen und/oder in die Strömung einzubringen (hineinzusaugen). Beispielsweise können stromaufwärts Zuführöffnungen für feste Partikel angeordnet sein, die aufgrund des erwähnten Saugeffektes selbständig in die Strömung eingesaugt werden.

Eine weitere Verwendung eines rotationssymmetrischen Strömungskörpers bei der erfindungsgemäßen Verwendung ist die als Aufprallfläche, insbesondere in einem strömenden, feste und/oder flüssige Partikel mitführenden Fluid.

Mit Fluid ist ein gasförmiges oder ein flüssiges Medium oder auch ein Gemisch aus einem gasförmigen und einem flüssigen Medium gemeint. Derartige Fluide können in ihrer Strömung Partikel mitführen, die festen oder flüssigen Aggregatszustand besitzen. Brennstoffgemische bestehen beispielsweise häufig aus einer brennbaren Flüssigkeit, die schwer brennbare hochviskose (flüssige) oder feste Bestandteile enthält. Auch Brenngase, die zerstäubte Flüssigkeit und/oder feste Partikel mitführen, werden als Brennstoffgemisch eingesetzt.

Trifft ein feste und/oder flüssige Partikel mitführendes Fluid auf einen rotationssymmetrischen Strömungskörper, werden je nach Strömungs- und Aufprallgeschwindigkeit die Partikel abgelenkt. Dies kann zum Zerstäuben und Zerkleinern mitgeführter Flüssigkeitstropfen oder hochviskoser Partikel oder zur Zerkleinerung fester Partikel ausgenutzt werden. Es ist aber auch möglich, diesen Effekt zur Separation zu verwenden. Beispielsweise können in radialer Richtung abgelenkte Partikel an einer Wand (oder ähnlichem) haften bleiben und somit vom restlichen Fluidstrom abgetrennt werden.

Der Strömungskörper lässt sich bei der erfindungsgemäßen Verwendung auch als Wärmetauscher einsetzen. Existiert in einer Strömung ein Temperaturgradient, wird durch das Einbringen eines aus einem wärmeleitenden Material bestehenden erfindungsgemäßen Strömungskörpers in diesem Strömungskörper (oder auf dessen Oberfläche) ein Wärmestrom einsetzen, wobei Wärme vom warmen zum kalten Abschnitt des Strömungskörpers fließt.

Wird bei einem Verbrennungsprozess in einem Abschnitt hinter dem hinteren Staupunkt des erfindungsgemäßen Strömungskörpers eine Flamme erzeugt, heizt sich im Laufe des Verbrennungsprozesses der Strömungskörper ausgehend vom hinteren Staupunkt zum vorderen Staupunkt hin auf. Dies hat zur Folge, dass auf den vorderen Staupunkt auftreffendes Brennstoffgemisch vorgeheizt wird. Weitere Vorteile ergeben sich aus dem weiter unten geschilderten Einsatz der erfindungsgemäßen Verwendung eines Strömungskörpers in einem Verbrennungsverfahren.

Eine weitere Verwendungsmöglichkeit des beschriebenen Strömungskörpers stellt die Verwendung als Durchflussregler dar. Durchflussregler regeln die Durchflussmenge und die Durchflussgeschwindigkeit eines strömenden Fluids, indem sie den Durchflussbereich des Fluids einengen. Bei herkömmlichen Ventilen geschieht dies durch einen in den Durchflussbereich eingebrachten Ventilkörper. Die Einengung führt jedoch häufig zur Wirbelbildung am Ventilkörper, so dass eine genaue Messung und Steuerung der Durchflussmenge bzw. Durchflussgeschwindigkeit erschwert wird. Außerdem ist bei vielen Anwendungen eine laminare Strömung hinter dem Ventil erwünscht.

Ein rotationssymmetrischer Strömungskörper kann nun wie ein Ventilkörper in einem Durchflussregler verwendet werden, indem er mit seiner Rotationsachse parallel zur Strömungsrichtung und mit seiner spitzen Profilhinterkante stromabwärts vor einer sich im Querschnitt verringernden Ventilausgangsleitung angeordnet wird. Der Durchmesser des Strömungskörpers wird in Abhängigkeit von den Leitungsdurchmessern geeignet gewählt. Durch Verschieben des Strömungskörpers in Strömungsrichtung kann der Querschnitt der Ventilausgangsleitung variabel überdeckt und hierdurch Menge und Geschwindigkeit des in die Ausgangsleitung strömenden Fluids gesteuert werden. Zum Leitungsverschluss wird der Strömungskörper bis zum Anschlag auf die Ventilausgangsleitung geschoben. Die am Strömungskörper vorbeiziehende Strömung ist laminar und erlaubt eine gute Messung der Durchflussmenge sowie eine optimale Einstellung der Strömungsgeschwindigkeit.

Eine Verwendung, bei der die obengenannten Eigenschaften des Strömungskörpers optimal ausgenutzt werden können, ist die erfindungsgemäße Verwendung in einem Verbrennungsverfahren, bei dem ein in einer Misch- und Reaktionskammer strömendes Brennstoffgemisch verbrannt wird, wobei der erfindungsgemäße Strömungskörper mit seiner Hauptachse innerhalb der Kammer in Strömungsrichtung angeordnet ist.

Für eine optimale Funktion wird auch hier der stumpfe Abschnitt als vorderer Staupunkt und die spitze Profilhinterkante als hinterer Staupunkt des Strömungskörpers verwendet. Es ist zum einen möglich, einen rotationssymmetrischen Strömungskörper einzusetzen, dessen Rotationsachse parallel zur Hauptachse der Misch- und Reaktionskammer verläuft oder auf dieser liegt. Es ist aber auch möglich, zwei oder mehrere Hälften oder Teilstücke eines solchen Strömungskörpers (wobei die Trennungsfläche oder Kante in etwa entlang der Rotationsachse verläuft) einzusetzen und solche Strömungskörperhälften an der Wand der Kammer entlang des Umfangs verteilt anzuordnen.

Bei einer derartigen Verwendung treten die folgenden günstigen Effekte auf:
1) Das Brennstoffgemisch, das flüssige, gasförmige sowie feste Bestandteile enthalten kann, wird beim Auftreffen auf den Strömungskörper abgelenkt, wodurch die Durchmischung der einzelnen zu verbrennenden Komponenten begünstigt wird. Flüssige Bestandteile zerstäuben beim Aufprall, feste werden zerkleinert. Dies bewirkt zunächst Turbulenzen im vorderen Bereich des Strömungskörpers. Insgesamt kann hierdurch die Verweilzeit der Brennstoffkomponenten sowie deren Durchmischung in der Kammer erhöht werden.
2) Gleichzeitig findet eine Vergleichmäßigung der Strömung stromabwärts entlang des Strömungskörpers statt. Das Gemisch wird im Bereich des Strömungskörpers beschleunigt, wobei die Geschwindigkeitsvektoren in der Umgebung des Strömungskörpers parallel zu diesem verlaufen, und deren Betrag mit zunehmendem Radialabstand zunächst anwächst, um in Richtung der Außenbegrenzung (z. B. Kammerwand) wieder abzunehmen. Insgesamt liegt nach Umfließen des Strömungskörpers eine laminare Strömung vor. An einer Auslassöffnung der Misch- und Reaktionskammer wird das Brennstoffgemisch entzündet, und eine Flamme entsteht in der Nähe der Auslassöffnung. Dabei ist es wesentlich, keinen Rückfluss des Brennstoffgemischs oder der Verbrennungsprodukte entgegen der Richtung der Auslassöffnung zu erzeugen, um insbesondere ein Rückschlagen der Flamme zu verhindern. Durch den Strömungskörper wird die Strömung des Brennstoffgemischs zur Auslassöffnung hin beschleunigt, so dass die Verbrennungsprodukte mit hoher Geschwindigkeit (bis nahe oder über Schallgeschwindigkeit) die Kammer durch die Auslassöffnung verlassen, was eine Saugwirkung zur Folge hat, durch die die Zuführung der Komponenten des Brennstoffgemischs in die Kammer unterstützt wird.
3) Schließlich wirkt der Strömungskörper bei dieser Anwendung als Wärmetauscher, da sich der Körper ausgehend vom hinteren Staupunkt, der der Verbrennungsflamme am nächsten liegt, in Richtung vorderer Staupunkt aufheizt. Im Dauerbetrieb kann folglich der Strömungskörper als Wärmetauscher eingesetzt werden, der die einströmenden Bestandteile des Brennstoffgemischs vorheizt. Dies unterstützt das Zerstäuben und Verdampfen von flüssigen Bestandteilen, das Zerkleinern und Sublimieren fester Bestandteile und insgesamt das Vorheizen des Brennstoffgemischs, wodurch insbesondere die Viskosität schwer brennbarer hochviskoser Bestandteile herabgesetzt wird. Aufgrund dieser Effekte erhöht sich die Verbrennungsgeschwindigkeit und die vollständige Verbrennung auch schwer brennbarer Bestandteile im Gemisch wird begünstigt. Hierdurch wird die Leistung des Brenners (Heizlei-stung) deutlich erhöht, so daß in gleichen Zeiteinheiten mehr Brennstoff verbrannt werden kann.

Optimal ist die Anordnung eines rotationssymmetrischen Strömungskörpers mit seiner Rotationsachse auf der Achse der Reaktionskammer, wobei der hintere Staupunkt (spitze Profilhinterkante) zur Auslassöffnung der Kammer hin gerichtet ist. Vorteilhaft ist eine Anordnung in der Nähe der Auslassöffnung, wobei durch Positionsänderung des Strömungskörpers die entstehende Verengung im Bereich der Auslassöffnung einstellbar ist, so dass der Strömungskörper zusätzlich als Durchflussregler fungiert.

Der Strömungskörper kann beispielsweise über dünne Haltestege von der (zylindrischen) Wand der Kammer ausgehend gehalten werden. Auch ein mehrteiliger Aufbau ist vorteilhaft, so dass einzelne Komponenten des Strömungskörpers zur Optimierung des Verbrennungsprozesses ausgetauscht werden können. Beispielsweise kann der Strömungskörper in einen vorderen, mittleren und einen hinteren Abschnitt unterteilt sein, wobei durch Austausch dieser Abschnitte die Geometrieparameter verändert werden können. Zur Messung der Parameter des Verbrennungsprozesses sowie der Eigenschaften des Strömungskörpers selbst können über die genannten Haltestege Sensoren und Messleitungen an oder in den Strömungskörper von außen zugeführt werden. Dies ermöglicht in einfacher Weise einen Zugang in das Innere der Misch- und Reaktionskammer.

Die oben beschriebenen Vorteile lassen sich mit einer erfindungsgemäßen Vorrichtung zur Verbrennung eines Brennstoffgemischs erzielen, die eine Misch- und Reaktionskammer aufweist, und einen mit seiner Hauptachse innerhalb dieser Kammer in Strömungsrichtung angeordneten Strömungskörper. Grundsätzlich ist die Form der Misch- und Reaktionskammer frei wählbar, z. B. kann diese einfache zylindrische Form aufweisen.

Es ist vorteilhaft, wenn die genannte Verbrennungsvorrichtung eine Misch- und Reaktionskammer aufweist, die sich stromabwärts verjüngt, um sich anschließend in Querschnitt wieder zu erweitern, so dass ein Hals die Stelle mit kleinstem Querschnitt bildet. Der Strömungskörper ist bei einer solchen Geometrie zweckmäßigerweise in Strömungsrichtung vor dem Hals angeordnet. Als besonders vorteilhaft hat sich eine Geometrie erwiesen, bei der die Misch- und Reaktionskammer einen unteren Abschnitt von zylindrischer Gestalt aufweist, an den sich ein kegelförmig verjüngender Abschnitt anschließt, wobei ausgehend von dem auf diese Weise gebildeten Hals sich ein Kopf von hyperboloidartiger Form mit sich erweiterndem Querschnitt anschließt, der seinerseits in einer Auslassöffnung endet. Zusammen mit dem in der Misch- oder Reaktionskammer angeordneten Strömungskörper kann mit einer solchen Vorrichtung eine optimale Regelung aller Verbrennungsparameter erfolgen, wie es insbesondere für die Verbrennung von Brennstoffen unterschiedlicher Zusammensetzung, insbesondere mit hochviskosen Anteilen, erforderlich ist.

Die geschilderten Vorrichtungen eignen sich zur Verwendung als Brenner, also zum Beheizen eines nachgeschalteten Volumens oder aber zur Verwendung als Triebwerk, d. h. zur Erzeugung eines Schubes.

Anhand der Figuren soll die Erfindung in Ausführungsbeispielen im folgenden näher erläutert werden.
Figur 1 zeigt einen Strömungskörper in rotationssymmetrischer Form.
Figur 2 zeigt das der Geometrie des Strömungskörpers zugrundeliegende Airfoil.
Figur 3 zeigt eine Verwendungsmöglichkeit des Strömungskörpers bei einem Verbrennungsprozeß in einer Misch- und Reaktionskammer.
Figur 4 zeigt die Trajektorien eines Fluidstroms in der in Figur 3 dargestellten Misch- und Reaktionskammer während des Verbrennungsprozesses.
Figur 5 zeigt eine ähnliche Darstellung wie Figur 4.
Figur 6 zeigt die Mach-Zahlen im Hals der Misch- und Reaktionskammer aus den Figuren 4 und 5.
Figur 7 zeigt die Geschwindigkeitsvektoren im oberen Teil einer Misch- und Reaktionskammer, wie sie in den Figuren 4 und 5 dargestellt ist.
Figur 8 zeigt eine Darstellung gemäß Figur 7 in höherer Auflösung.

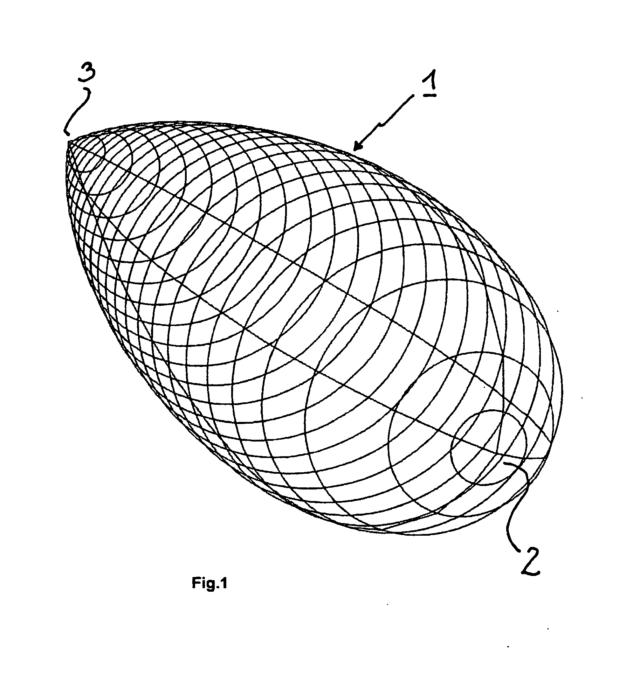

Figur 1 zeigt in dreidimensionaler Darstellung einen Strömungskörper 1 mit seinen beiden Staupunkten 2 und 3. Der Strömungskörper 1 besitzt rotationssymmetrische Gestalt und entspricht in diesem Beispiel im wesentlichen einem rotationssymmetrischen Airfoil. Strömungstechnisch ist eine Anordnung günstig, bei der der Staupunkt 2 als vorderer Staupunkt, der Staupunkt 3 als hinterer Staupunkt verwendet wird, die Strömung also vom vorderen Staupunkt 2 zum hinteren Staupunkt 3 fließt.

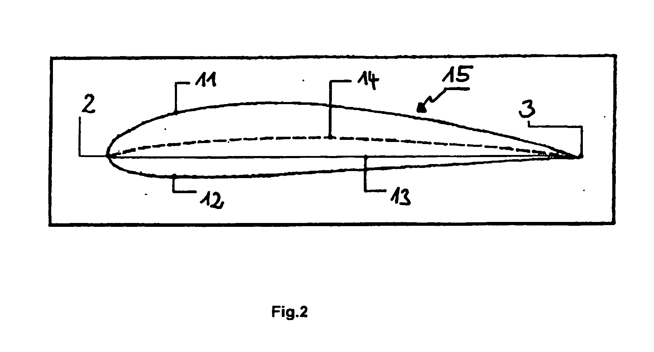

Figur 2 zeigt ein Beispiel eines Airfoils 15 mit einer Oberseite 11 und einer Unterseite 12, einem vorderen Staupunkt 2 und einem hinteren Staupunkt 3 sowie einer Profilsehne 13 und einer Mittellinie 14. Bei Rotation eines derartigen Airfoils 15 um die Profilsehne 13 entsteht die Oberfläche eines Strömungskörpers 1, wie er beispielsweise in Figur 1 dargestellt ist. Wie aus Figur 2 ersichtlich, kommt es bei der Rotation des Airfoils aufgrund der Geometrieverhältnisse nur auf die Oberseite 11 an, so daß der rotationssymmetrische Strömungskörper auch durch Rotation der Oberseite 11 des Airfoils (bzw. eines Tragflügelquerschnitts) um die Profilsehne 13 erzeugt werden kann.

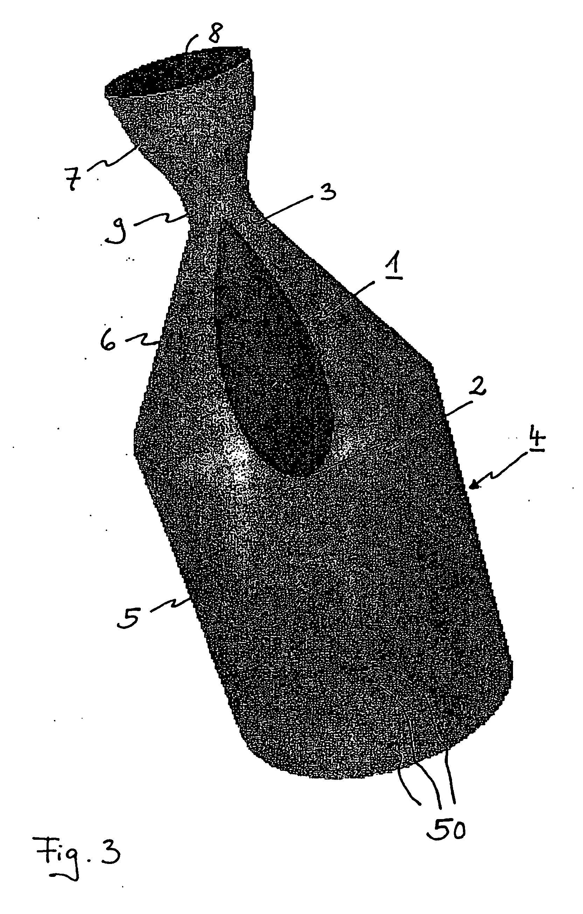

Figur 3 illustriert eine vorteilhafte Ausführungsform einer erfindungsgemäßen Vorrichtung zur Verbrennung von Brennstoffen mit einem oben beschriebenen Strömungskörper 1. Dargestellt ist eine Misch- und Reaktionskammer 4, deren unterer Abschnitt 5 zylindrische Gestalt aufweist, und die sich zunächst nach oben hin im Abschnitt 6 kegelförmig verjüngt. Im Hals 9 erreicht die Kammer ihren geringsten Querschnitt, der sich von dort ausgehend im Kopf 7 wieder vergrößert. Der Kammerkopf 7 besitzt eine hyperboloidartige Form. Die Auslassöffnung der Kammer ist mit 8 gekennzeichnet. Im Boden der Kammer 4 sind Zuführleitungen 50 für die Bestandteile des zu verbrennenden Gemischs, wie beispielsweise gasförmiger und/oder flüssiger und/oder fester Brennstoff, Luft und/oder ein weiteres oder anderes Oxidationsmittel und eventuell Wasser oder andere Zusätze.

Die hier dargestellte Ausführungsform der Verbrennungsvorrichtung dient insbesondere zur Verwendung als Brenner mit vielfältigen industriellen Einsatzmöglichkeiten (Beheizung von Öfen, Einschmelzen von Materialien, wie Metalle oder Glas, Verdampfen von Wasser oder anderen Flüssigkeiten). Eine andere Anwendungsmöglichkeit der erfindungsgemäßen Vorrichtung ist die als Triebwerk zur Erzeugung eines Schubes. Hierzu kann eine ähnliche Ausführungsform, wie die in Figur 3 dargestellte, zum Einsatz kommen, wobei der Boden der Kammer 4 ganz oder teilweise entfernt werden muss, um eine Durchströmung des Inneren der Vorrichtung zu ermöglichen. Es bietet sich hier der Einsatz als Triebwerk in einem Fluid, wie Luft oder insbesondere auch Wasser, an.

Die Bestandteile des Brennstoffgemischs werden unter Druck zunächst in das Innere der Kammer 4 eingeleitet und im Inneren der Kammer 4 gezündet. Zu den Einzelheiten des Verbrennungsprozesses sei an dieser Stelle ausdrücklich auf die WO 99/24756 derselben Anmelderin verwiesen.

Aufgrund der Strömungsverhältnisse in der Misch- und Reaktionskammer 4 bildet sich die eigentliche Verbrennungsflamme in der Umgebung der Auslassöffnung 8 aus. Die Strömungsverhältnisse im Inneren der Kammer müssen so ausgebildet sein, daß zum einen ein Abreißen der Flamme verhindert wird, zum anderen ein Rückschlagen der Flamme in das Innere der Kammer vermieden wird. Ein ideales Instrument zur Regelung und Steuerung der Strömungsverhältnisse im Inneren der Kammer 4 bildet der erfindungsgemäße Strömungskörper 1. Er kann durch Halte- und/oder Führungsstege im Inneren der Kammer 4 ortsfest oder ortsvariabel gehaltert sein, insbesondere ist eine Verschiebungsmöglichkeit entlang der Hauptachse der Kammer in Richtung des Halses 9 vorteilhaft.

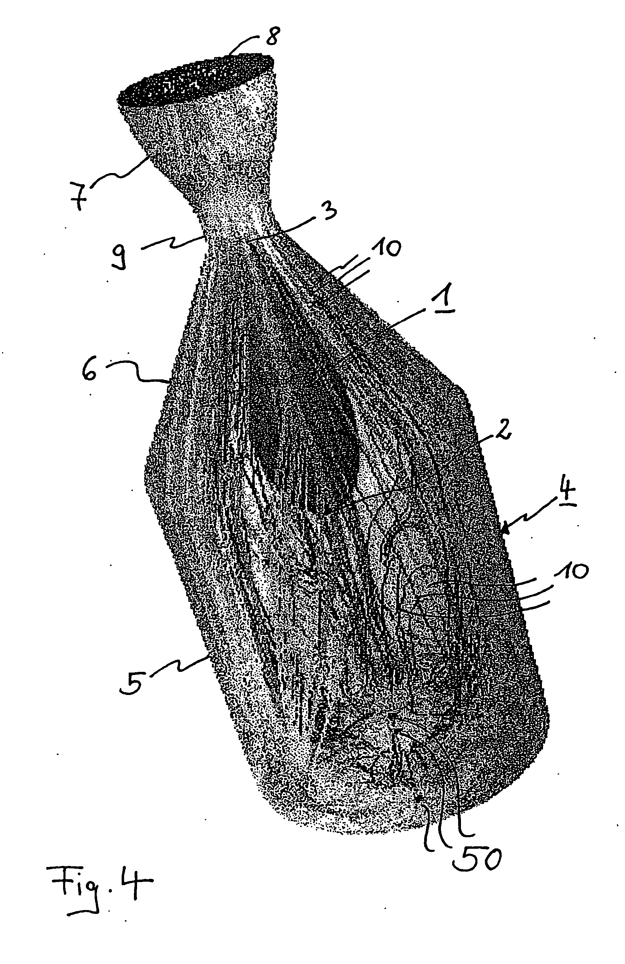

Figur 4 zeigt den Teilchenstrom, wie er bei Betrieb der Misch- und Reaktionskammer 4 ausgebildet ist. Anhand der Trajektorien 10 ist deutlich erkennbar, daß es im unteren zylindrischen Abschnitt 5 der Kammer 4 zu Turbulenzen kommt, in deren Verlauf einzelne Trajektorien einen Weg zurück in Richtung Boden der Kammer 4 beschreiben. Diese Turbulenzen sind für das Verbrennungsverfahren vorteilhaft, da sie zu einer höheren Durchmischung und längeren Verweilzeit der Komponenten des Brennstoffgemischs in der Kammer 4 führen, wodurch die vollständige Verbrennung begünstigt wird.

Im weiteren Verlauf, d.h. in Richtung des sich verjüngenden Kammerabschnitts 6, erkennt man aus Figur 4 deutlich eine sich ordnende Strömung, die entlang des erfindungsgemäßen Strömungskörpers 1 laminar wird, wobei sich das Profil des erfindungsgemäßen Strömungskörpers 1 gleichsam im Strömungsverlauf fortsetzt.

Am hinteren Staupunkt 3 des Strömungskörpers 1, der im Ausführungsbeispiel gemäß Figur 4 nahezu im Hals 9 der Kammer 4 angeordnet ist, liegt eine vollständig vergleichmäßigte Strömung vor, die die Kammer 4 über den Kammerkopf 7 durch die Auslassöffnung 8 verläßt. Dort brennt stabil (eine nicht dargestellte) Flamme.

Es sei darauf hingewiesen, daß in Figur 4 der Strömungsverlauf eines Fluids und/oder von einem Fluid mitgerissener Partikel anhand beispielhaft dargestellter Trajektorien von Modellteilchen dargestellt ist.

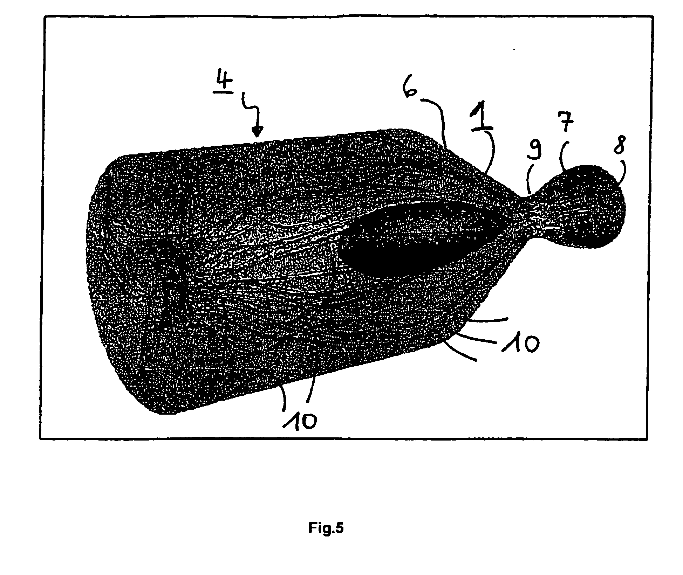

Eine ähnliche Darstellung wie die der Figur 4 zeigt die Figur 5, für die eine andere dreidimensionale Ansicht gewählt ist. Es gelten hier die gleichen Ausführungen wie für die bereits erörterte Figur 4. Gleiche Bestandteile sind mit gleichen Bezugsziffern gekennzeichnet.

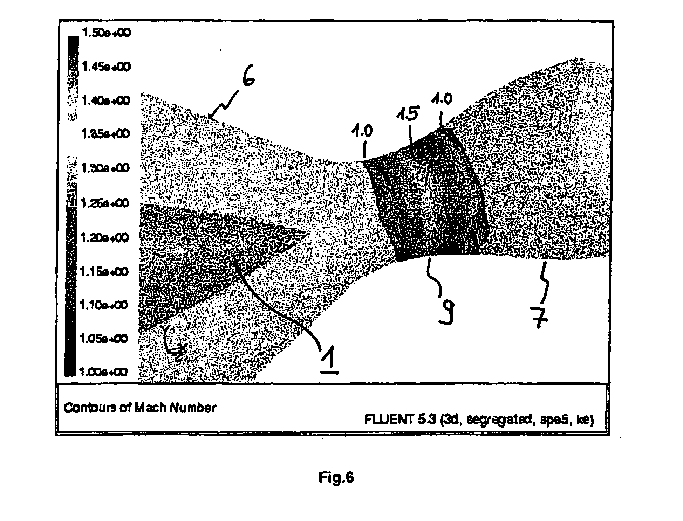

Figur 6 zeigt nun den oberen Abschnitt einer wie in den Figuren 4 und 5 dargestellten Misch- und Reaktionskammer 4, wobei die Verhältnisse der Geschwindigkeitsverteilung im Hals 9 der Kammer 4 dargestellt sind. Dargestellt ist die Verteilung der Mach-Zahlen im Hals 9 und im Kopf 7 der Kammer 4 bei einem Verbrennungsprozess. Die Temperaturen betragen bei diesem Beispiel etwa 1.300° C. Dargestellt sind in unterschiedlichen Graustufen die Mach-Zahlen, also das Vielfache der Schallgeschwindigkeit. Aufgrund der Graustufendarstellung ist die ursprüngliche Farbinformation verlorengegangen, so dass diese durch wörtliche Beschreibung ersetzt werden muß: Deutlich zu sehen ist die dunklere Manschette um den Hals 9 der Kammer 4, die Bereiche angibt, in denen die Schallgeschwindigkeit vom ausströmenden Gemisch überschritten wird. Der Balken links im Bild gibt hierbei die auftretenden Werte an, die zwischen dem 1,0-fachen und dem 1,5-fachen der Schallgeschwindigkeit liegen. Niedrigere Werte als Schallgeschwindigkeit sind in Figur 6 durch die gleichmäßige Graufärbung wiedergegeben. Deutlich sichtbar ist der nahe dem Hals 9 positionierte erfindungsgemäße Strömungskörper 1. Die Verteilung der Mach-Zahlen ist nunmehr wie folgt: Beginnend mit Mach-Zahl 1,0 am unteren dunklen Rand der Manschette steigt die Mach-Zahl kontinuierlich auf 1,5, die Graustufendarstellung entspricht somit genau dem im linken Bildrand dargestellten Balken. Der Wert 1,5 ist wiederum durch einen dunklen Abschnitt wiedergegeben. Anschließend sinkt der Wert der Mach-Zahl wieder auf den Wert 1,0 ab, wobei das Absinken innerhalb eines kürzeren Abschnitts der Manschette erfolgt, so dass hier wieder die umgekehrte Verteilung des im linken Bildrand dargestellten Balkens vorliegt.

Das beschriebene Erreichen von Überschallgeschwindigkeit wird durch das Zusammenwirken des erfindungsgemäßen Strömungskörpers 1 mit der Geometrie der Kammer 4 erreicht. Kopf 7 und Hals 9 der Kammer sind hyperboloidartig geformt und schließen sich an den verjüngenden Abschnitt 6 an, so dass bereits durch diese Geometrie eine starke Beschleunigung der Strömung zur Auslassöffnung 8 hin bewirkt wird. Dies wird noch verstärkt durch den erfindungsgemäßen Strömungskörper 1, auf dessen Oberfläche eine Druckabsenkung erfolgt, die zu einer Erhöhung der Strömungsgeschwindigkeit führt.

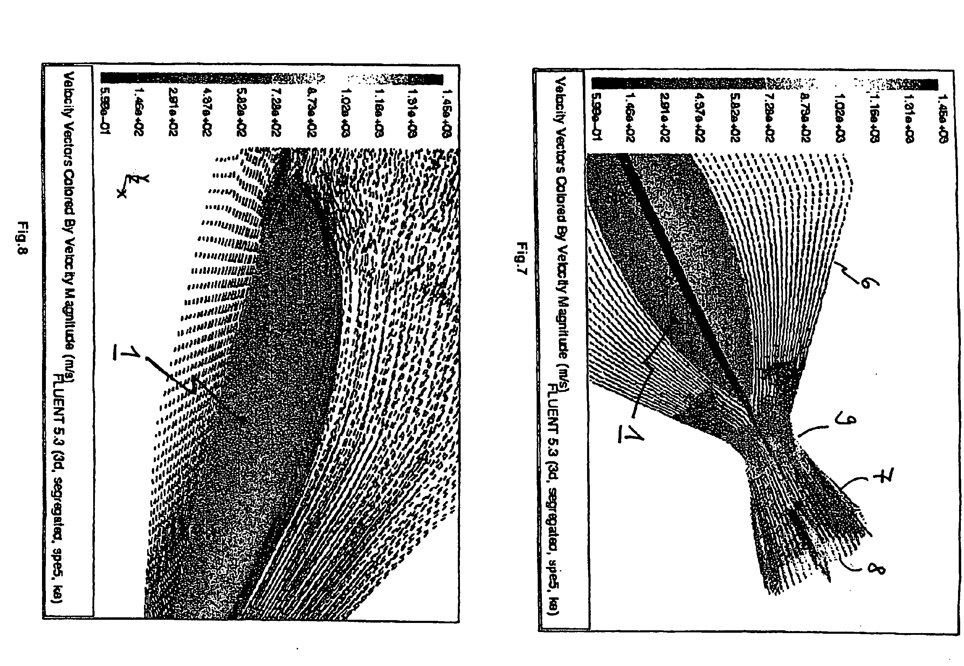

Die Figuren 7 und 8 zeigen schließlich die Verteilung der Geschwindigkeitsvektoren im oberen Bereich der Misch- und Reaktionskammer bzw. am Strömungskörper 1 bei einem Verbrennungsvorgang, wobei Figur 8 einen Ausschnitt in vergrößerter Darstellung bietet, bei dem der Strömungskörper nicht in seiner vollständig rotationssymmetrischen Gestalt, sondern in einer, unter einem Winkel von 120° aufgeschnittenen Form dargestellt ist.

Deutlich sichtbar ist, wie sich das Profil des Strömungskörpers 1 in der Strömung fortsetzt, die vollständig gleichmäßig zwischen Strömungskörper 1 und Wand der Kammer 4 zum Hals 9 hin verläuft.

Als Material für den Strömungskörper 1 eignet sich beispielsweise eine (ODS-)Ni-Legierung oder Keramik-Legierung bzw. ein Keramiküberzug, insbesondere für den Einsatz in einem Verbrennungsverfahren.

## Patentansprüche

1. Verwendung eines Strömungskörpers in einem Verbrennungsverfahren, bei dem ein in einer Misch- und Reaktionskammer (4) strömendes Brennstoffgemisch verbrannt wird, wobei der Strömungskörper (1) mit seiner Hauptachse innerhalb der Kammer in Strömungsrichtung angeordnet ist und wobei die äußere Oberfläche des Strömungskörpers (1) durch Rotation der Oberseite (11) eines Tragflügelprofils (15) um seine Profilsehne (13) erzeugt ist.

2. Verwendung eines Strömungskörpers nach Anspruch 1, wobei der Strömungskörper (1) in seiner Geometrie veränderbar ist.

3. Verwendung eines Strömungskörpers (1) nach einem der Ansprüche 1 bis 2 zur Erzeugung einer laminaren Strömung.

4. Verwendung eines Strömungskörpers (1) nach einem der Ansprüche 1 bis 2 durch Einbringen des Strömungskörpers (1) mit seiner Hauptachse in Strömungsrichtung in einen sonst freien Strömungsquerschnitt zur Erzeugung eines Saugeffektes in Strömungsrichtung.

5. Verwendung eines Strömungskörpers (1) nach einem der Ansprüche 1 bis 2 als Wärmetauscher durch Einbringen eines wärmeleitenden Strömungskörpers (1) in eine Strömung mit Temperaturgradient.

6. Verwendung eines Strömungskörpers (1) nach einem der Ansprüche 1 bis 2, wobei der hintere Staupunkt (3) des Strömungskörpers (1) stromabwärts angeordnet ist.

7. Verwendung eines Strömungskörpers (1) nach einem der Ansprüche 1 bis 2 oder nach Anspruch 6 als Aufprallfläche für das einströmende Brennstoffgemisch.

8. Verwendung nach Anspruch 7 zur Separation und/oder zur Verteilung, Zerstäubung bzw. Verkleinerung von im Brennstoffgemisch vorhandenen gasförmigen, flüssigen und/oder festen Bestandteilen.

9. Verwendung nach Anspruch 7 oder 8 zur Verlangsamung der Bestandteile des Brennstoffgemischs, zur Erhöhung der Verweilzeit dieser Bestandteile sowie zur stärkeren Vermischung dieser Bestandteile.

10. Verwendung eines Strömungskörpers (1) nach einem der Ansprüche 1 bis 2 oder nach einem der Ansprüche 6 bis 9 zur Beschleunigung der Strömung des Brennstoffgemisches und der Verbrennungsprodukte in der Misch- und Reaktionskammer (4) zu einer Auslaßöffnung dieser Kammer hin.

11. Verwendung eines Strömungskörpers (1) nach einem der Ansprüche 1 bis 2 oder nach einem der Ansprüche 6 bis 10 als Wärmetauscher zum Vorheizen des Brennstoffgemischs.

12. Vorrichtung zur Verbrennung eines Brennstoffgemischs mit einer Misch- und Reaktionskammer (4) und einem mit seiner Hauptachse innerhalb der Kammer in Strömungsrichtung angeordneten Strömungskörper (1), **dadurch gekennzeichnet, dass** die äußere Oberfläche des Strömungskörpers (1) durch Rotation der Oberseite (11) eines Tragflügelprofils (15) um seine Profilsehne (13) erzeugt ist.

13. Vorrichtung nach Anspruch 12, **dadurch gekennzeichnet, dass** die Misch- und Reaktionskammer (4) einen unteren Abschnitt (5) von zylindrischer Gestalt aufweist, an den sich ein kegelförmig verjüngender Abschnitt (6) anschließt, an den sich ein Kopf (7) von hyperboloidartiger Form mit sich erweiterndem Querschnitt anschließt, der in einer Auslassöffnung (8) endet.

14. Vorrichtung nach Anspruch 13, **dadurch gekennzeichnet, dass** der Strömungskörper (1) mit seiner Hauptachse auf der Hauptachse der Misch- und Reaktionskammer (4), insbesondere variabel, angeordnet ist.

## Claims

1. Use of a streamlined body (1) in a combustion process, wherein a fuel mixture flowing in a mixing and reaction chamber (4) is combusted, the streamlined body (1) having a main axis and being arranged with its main axis inside the chamber in the direction of flow, and wherein the outer surface of the streamlined body (1) is generated by rotating the upper side (11) of an aeroplane wing profile (15) about its profile chord (13).

2. The use of a streamlined body (1) according to claim 1, wherein the streamlined body (1) is variable in its geometry.

3. The use of a streamlined body (1) according to claim 1 or 2 for producing a laminar flow.

4. The use of a streamlined body (1) according to claim 1 or 2 by placing the streamlined body (1) with its main axis in the direction of flow in an otherwise free cross section of flow in order to produce a suction effect in the direction of flow.

5. The use of a streamlined body (1) according to claim 1 or 2 as a heat exchanger by placing a heat conductive streamlined body (1) in a flow having a temperature gradient.

6. The use of a streamlined body (1) according to claim 1 or 2, wherein the rear stagnation point (3) of the streamlined body (1) is arranged downstream.

7. The use of a streamlined body (1) according to claim 1 or 2 or according to claim 6 as an impact surface for the inflowing fuel mixture.

8. The use according to claim 7 for at least one of separation, distribution, atomisation and diminution of gaseous, liquid and solid components, respectively, being present in the fuel mixture.

9. The use according to claim 7 or 8 for slowing down the components of the fuel mixture, for increasing the resident time of said components and for mixing said components more thoroughly.

10. The use of a streamlined body (1) according to claim 1 or 2 or according to any one of the claims 6 to 9 for accelerating the flow of the fuel mixture and of the combustion products in the mixing and reaction chamber (4) towards an outlet opening of the chamber.

11. The use of a streamlined body (1) according to claim 1 or 2 or according to any one of the claims 6 to 10 as a heat exchanger for preheating the fuel mixture.

12. An apparatus for combusting a fuel mixture, the apparatus comprising a mixing and reaction chamber (4) and a streamlined body (1) having a main axis and being arranged with its main axis inside the chamber in the direction of flow, **characterised in that** the outer surface of the streamlined body (1) is generated by rotating the upper side (11) of an aeroplane wing profile (15) about its profile chord (13).

13. The apparatus according to claim 12, **characterised in that** the mixing and reaction chamber (4) has a cylindrically shaped lower section (5), said section being adjoint by a conically tapering section (6), the latter section being adjoint by a head (7) of hyperboloid-like shape having a widening cross section which terminates in an outlet opening (8).

14. The apparatus according to claim 13, **characterised in that** the streamlined body (1) is arranged with its main axis on the main axis of the mixing and reaction chamber (4), particularly in a variable manner.

## Revendications

1. Utilisation d'un corps d'écoulement dans un procédé de combustion, dans lequel un mélange comburant s'écoulant dans une chambre de mélange et de réaction (4) est brûlé, le corps d'écoulement (1) étant agencé avec son axe principal à l'intérieur de la chambre dans la direction d'écoulement et la surface extérieure du corps d'écoulement (1) étant générée par rotation de la face supérieure (11) d'un profil d'aile portante (15) autour de sa corde de profil (13).

2. Utilisation d'un corps d'écoulement selon la revendication 1, dans lequel le corps d'écoulement (1) est variable dans sa géométrie.

3. Utilisation d'un corps d'écoulement (1) selon l'une quelconque des revendications 1 à 2 pour produire un écoulement laminaire.

4. Utilisation d'un corps d'écoulement (1) selon l'une quelconque des revendications 1 à 2 en plaçant le corps d'écoulement (1) avec son axe principal dans la direction d'écoulement, dans une section transversale d'écoulement sinon libre afin de produire un effet d'aspiration dans la direction d'écoulement.

5. Utilisation d'un corps d'écoulement (1) selon l'une quelconque des revendications 1 à 2 comme échangeur de chaleur en plaçant un corps d'écoulement thermiquement conducteur (1) dans un écoulement avec un gradient de température.

6. Utilisation d'un corps d'écoulement (1) selon l'une quelconque des revendications 1 à 2, dans laquelle le point de stagnation arrière (3) du corps d'écoulement (1) est agencé en aval.

7. Utilisation d'un corps d'écoulement (1) selon l'une quelconque des revendications 1 à 2 ou selon la revendication 6 comme surface d'impact pour le mélange comburant affluant.

8. Utilisation selon la revendication 7 pour séparer et/ou distribuer, atomiser ou diminuer des composants gazeux, liquides et/ou solides présents dans le mélange comburant.

9. Utilisation selon la revendication 7 ou 8 pour ralentir des composants du mélange comburant, pour augmenter le temps de séjour de ces composants ainsi que pour renforcer le mélange de ces composants.

10. Utilisation d'un corps d'écoulement (1) selon l'une quelconque des revendications 1 à 2 ou selon l'une quelconque des revendications 6 à 9 pour accélérer l'écoulement du mélange comburant et des produits de combustion dans la chambre de mélange et de réaction (4) jusqu'à une ouverture de sortie de cette chambre.

11. Utilisation d'un corps d'écoulement (1) selon l'une quelconque des revendications 1 à 2 ou selon l'une quelconque des revendications 6 à 10 comme échangeur de chaleur pour préchauffer le mélange comburant.

12. Dispositif pour brûler un mélange comburant, comportant une chambre de mélange et de réaction (4) et un corps d'écoulement (1) agencé avec son axe principal à l'intérieur de la chambre dans la direction d'écoulement, **caractérisé en ce que** la surface extérieure du corps d'écoulement (1) est générée par rotation de la face supérieure (11) d'un profil d'aile portante (15) autour de sa corde de profil (13).

13. Dispositif selon la revendication 12, **caractérisé en ce que** la chambre de mélange et de réaction (4) comporte une partie inférieure (5) de forme cylindrique, à laquelle est reliée une partie qui s'amincit de manière conique (6), à laquelle est reliée une tête (7) de forme hyperboloïde avec une section transversale qui s'élargit, qui se termine dans une ouverture de sortie (8).

14. Dispositif selon la revendication 13, **caractérisé en ce que** le corps d'écoulement (1) est agencé, en particulier de manière variable, avec son axe principal sur l'axe principal de la chambre de mélange et de réaction (4).
